# EUROPEAN PATENT SPECIFICATION

(11) **EP 1 714 041 B1**
(45) Date of publication and mention of the grant of the patent: **31.03.2010**
(21) Application number: 04764152.7
(22) Date of filing: 16.08.2004
(51) Int. Cl.: F15D 1/12, B63H 1/18

(54) **PROTECTION OF SURFACES AGAINST CAVITATION EROSION**
SCHUTZ VON FLÄCHEN GEGEN KAVITATIONSEROSION
PROTECTION DE SURFACES CONTRE UNE EROSION PAR CAVITATION

(30) Priority: 09.02.2004 US 542292 P
(43) Date of publication of application: 25.10.2006
(73) Proprietor: PAUL SCHERRER INSTITUT, 5232 Villigen PSI (CH)
(72) Inventor: THOMSEN, Knud, CH-5322 Koblenz (CH)
(74) Representative: Fischer, Michael
(86) International application number: PCT/EP2004/009160
(87) International publication number: WO 2005/075838

(56) References cited:
- WO-A-01/53147
- WO-A-02/066060
- GB-A- 2 268 450
- US-A- 5 967 071
- US-B1- 6 644 926
- BAUER G S: "Discussion session summary: cavitation erosion" JOURNAL OF NUCLEAR MATERIALS, AMSTERDAM, NL, vol. 318, 15 May 2003 (2003-05-15), pages 365-367, XP004424706 ISSN: 0022-3115

## Description

The present invention relates to protection of windows in Pulsed Spallation Targets.

It is a well known fact that most surfaces degrade due to cavitation erosion when subjected to a dynamic environment in a liquid. The dynamic conditions might be caused by rapid movement of a device inside a liquid or by the fast flow of the liquid or by pulsed energy deposition into the liquid.

Cavitation arises when the pressure at a point inside a liquid falls below the vapor pressure of the liquid at the given temperature. Usually, different periods in the progression of damage and erosion can be distinguished. Peculiarities like the presence and type of inhomogeneities and seeds in the liquid determine the details of the onset of cavitation. Cavitation severely impedes the functionality of the affected parts and limits their lifetime substantially. Several diverse modes of action for the detailed damage mechanism and the aggravation of erosion have been proposed.

Prior art solutions make use of strong materials, hard surface coatings and the admixture of gas to make the liquid softer, i.e. more compressible. In addition, shape optimisation is a common approach in order to somehow retard the onset and limit the occurrence of cavitation. In the case of hydrofoils, for example, another approach includes engulfing almost the complete structure inside a big gas (vapor) bubble, i.e. super-cavitating or super-ventilating designs, the main purpose of which is more focused on drag reduction. Other attempts to reduce the drag of moving objects, including complete ships use bubble ejection without concern to cavitation. Herein, the bubbles are released about certain ship surfaces and into the surrounding waters so as to reduce drag. One reason for such unconcern regarding cavitation is the very low relative velocities encountered by the effected vehicle surfaces.

Problems with the prior art solutions relate to the limited effectiveness of the known measures and the impossibility to meet all constraints, as for example for a propeller over an extended working range, simultaneously. Surfaces made from special materials or treated with the best available techniques and coatings still show vulnerability to attack by cavitation, albeit at longer operating times or higher load levels or repetition numbers. Added gas bubbles in the volume of the liquid follow its flow and trace the pressure distribution. They are seldomly concentrated in the optimum locations and thus are of limited value - namely use for the to-be-protected surface. Super-cavitating and super-ventilating devices can only be employed for a rather limited scope of tasks.

Devices with walls which are in need of protection against damage by cavitation erosion include windows in spallation targets, especially in pulsed neutron sources. Different portions of the surface of a structure in contact with a liquid show different susceptibility to cavitation erosion also depending on many details including operational conditions. The article of BAUER G S:"Discussion session summary: cavitation erosion" in JOURNAL OF NUCLEAR MATERIALS, AMSTERDAM, NL, vol. 318,15 May 2003 (2003-05-95), pages 365-367, XP004424706 ISSN:0022-3115 is discussing the problem of wear and pitting in the environment of pulsed spallation targets (see page 367; left column; second paragraph, in particular).

It is a task of the present invention to protect windows in pulsed spallation targets prone to cavitation attack by ensuring a sufficient density of gas bubbles of suitable composition and size residing right at the surface to be protected and its close vicinity. The amount of gas might be controlled accurately to yield a volume fraction of gas in the liquid in the relevant volume in the order of percent. In order to concentrate gas at an intended surface it is proposed to structure it in a suitable way to agglomerate, trap and retain gas bubbles there.

A certain fraction of the gas bubbles at a surface will be continuously lost into the adjacent liquid. Gas might be replenished to the surface out of the liquid with the surface structuring catching bubbles as they come along with the liquid flow. Another possibility would be to incorporate gas ducts in the bulk material underneath the surface to allow for a steady and controllable gas supply renewing lost bubbles.

Depending on the details of the requirements including the liquids and processes involved, materials, structures and carefully controlled supply of a suitable gas can be selected from a very wide variety. Special forms of discharge openings might be chosen to avoid crevice formation as seen in wormhole erosion. Gas distribution channels and ejection hole geometries might be employed similarly to the ones developed for use in gas bearings or cooling of fins in turbines at high temperatures. Specific design technicalities can be adapted and tailored to a very wide range of specific demands and applications. A process of laser-drilling might advantageously be combined with a laser-based surface treatment I hardening step like alloying.

The invention works for any hard surface material including metals, ceramics, and all kinds of diverse composites.

The invention works for any type of liquid including water, organic and inorganic solutions, hydrocarbons, any mixture and chemical solution, and liquid metals. For particular applications, any type of sufficiently non-condensable gas might be employed.

The present invention is directed to a window in pulsed spallation targets in any type of liquid as set out in the precharacterizing portion of claim 1 and more particularly to a surface having smooth and non-smooth structures as set out in the body of the claim. Other features and advantages of the present invention are discussed in the dependent claims.

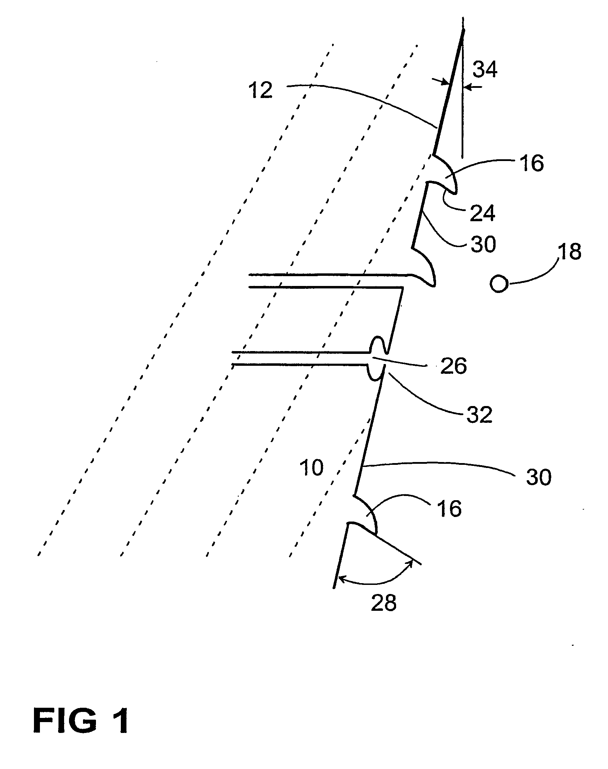

Figure 1 presents a cross section of a surface including protrusions extending therefrom as well as means for gas replenishment.

The present invention is depicted in figure 1 which shows a cross section of a surface including a plurality of protrusions anchoring a plurality of bubbles to the surface and replenishment ducts with gas feeding from the rear side of the surface. The non-smooth portion may include extensions shaped and angled so as to catch and maintain or anchor bubbles in a preselected position according to the requirements and design details. Practical considerations for the protrusions and openings include the type of wall material, type of liquid, gas feed possibilities, total amount of materials needed and boundary conditions of operating states as e.g. temperatures and cooling requirements. The manufacture of the extensions or other surface structures discussed below may be combined with multilayer coatings of like or different material to the surface being worked. Likewise, special patterns including well specified single surface irregularities and also structures distributed in random may form part of the present inventive structure. Surface structure further depends upon design and application.

As depicted in figure 1, a wall 10 with a surface 12 is facing a liquid 14. The wall, in total might be inclined from the vertical by an angle 34 so as to enhance the capturing of gas bubbles from the liquid. The surface is structured in a special way with some types of protrusions 16 arranged so as to catch gas bubbles 18 moving with the flow of the liquid or rising within the liquid due to their buoyancy. The recessions 20 of the surface thus defined by the protrusions 16 provide the preferred positions and holes for gas bubbles. In case active gas replenishment is incorporated, gas is fed through thin ducts 22 to the rear wall of such gas pockets 24. In addition or in place of the extensions, imperfections and irregularities in or on the wall 10 may be introduced. Such may cover all or part of the wall depending upon application. In another embodiment with gas replenishment the surface might be essentially flat with distributed gas bleeding holes 32. Gas bleeding holes 32 are openings from which gas escapes in a steady flow or in a controlled and regulated manner. According to the specific requirements of the exact locations, geometrical implementation, size and diameter of optimum bleeding holes might differ in detail. As applied to the present application, the escape of gas bubbles may be controlled by application by means known in the art.

The measures as proposed for protection against erosion due to cavitation might have very welcome beneficial side effects, including: gas bleeding out of the leading edge and surface patches of a propeller to tame cavitation and avoid pitting may at the same time improve efficiency by reducing drag. Active tuning of the amount of supplied gas might allow to optimally cover an extended range of operational conditions. Such may be accomplished by gas control and different measuring means like noise monitoring known to one skilled in the art.

### LIST OF ELEMENTS

- 10: structure, solid / liquid interface
- 12: surface, liquid side
- 14: liquid
- 16: protrusion, extension, "lip"
- 18: gas bubble
- 20: recess
- 22: gas feeding duct
- 24: gas pocket
- 26: cavity
- 28: angle protrusion / general surface
- 30: smooth section
- 32: bleeding hole / outlet
- 34: angle of inclination against vertical

## Claims

1. A window in a pulsed spallation target comprising a solid/liquid interface, said solid/liquid interface (10) having a liquid facing surface (12), wherein the surface (12) comprises smooth (30) and non-smooth (16) structures, the non-smooth structures (16) arranged to maintain gas bubbles (18) proximate to the surface (12).

2. The window according to claim 1, further **characterized by** bubble source means (22, 26, 32) arranged to produce bubbles (18) proximate to the surface.

3. The window according to claims 1 or 2, wherein the non-smooth structures (16) comprise at least one protrusion (16) arranged on the surface (12) extending in a direction away from the surface.

4. The window according to claim 3, wherein the at least one protrusion (16) extends at an angle (28) to the surface (12) thereby cooperating with the flat portions of the surface (12) so as to define a recess (20) arranged to maintain at least one bubble (18) proximate to the surface (12).

5. The window according to claim 2, wherein the bubble source means comprises at least one gas feeding duct (22) arranged such that its outlet (32) is proximate to the surface (12).

6. The window according to claim 5, wherein the bubble source further comprises a cavity (26) arranged between the feeding duct and the outlet (32) at the surface (12) so as to define a gas bleeding hole

7. The window according any of the claims 2 to 6, therein the surface (12) comprises a hard material including at least one of a metal, ceramic and composite.

## Patentansprüche

1. Fenster in einem Target für gepulste Spallation, das eine Fest/Flüssig-Grenzfläche umfasst, wobei die Fest/Flüssig-Grenzfläche (10) eine flüssigkeitszugewandte Oberfläche (12) besitzt, wobei die flüssigkeitszugewandte Oberfläche (12) glatte (30) und nicht glatte (16) Strukturen aufweist, wobei die nicht glatten Strukturen (16) derart angeordnet sind, dass sie Gasblasen (18) in der Nähe der flüssigkeitszugewandten Oberfläche (12) festhalten.

2. Fenster gemäß Anspruch 1, ferner **gekennzeichnet durch** Blasenquellenmittel (22, 26, 32), die dafür ausgelegt sind, Blasen (18) in der Nähe der flüssigkeitszugewandten Oberfläche zu erzeugen.

3. Fenster gemäß Anspruch 1 oder 2, wobei die nicht glatten Strukturen (16) mindestens einen Vorsprung (16) umfassen, der auf der flüssigkeitszugewandten Oberfläche (12) angeordnet ist und sich in einer Richtung weg von der flüssigkeitszugewandten Oberfläche erstreckt.

4. Fenster gemäß Anspruch 3, wobei der mindestens eine Vorsprung (16) sich in einem Winkel (28) zu der flüssigkeitszugewandten Oberfläche (12) erstreckt und **dadurch** mit den flachen Teilen der flüssigkeitszugewandten Oberfläche (12) zusammenwirkt, um eine Ausbuchtung (20) zu bilden, die dafür ausgelegt ist, mindestens eine Blase (18) in der Nähe der flüssigkeitszugewandten Oberfläche (12) festzuhalten.

5. Fenster gemäß Anspruch 2, wobei das Blasenquellenmittel mindestens einen Gaszuführungskanal (22) umfasst, der derart angeordnet ist, dass sein Auslass (32) in der Nähe der flüssigkeitszugewandten Oberfläche (12) liegt.

6. Fenster gemäß Anspruch 5, wobei das Blasenquellenmittel ferner einen Hohlraum (26) umfasst, der zwischen dem Gaszuführungskanal und dem Auslass (32) an der flüssigkeitszugewandten Oberfläche (12) angeordnet ist, sodass er eine Gasaustrittsöffnung definiert.

7. Fenster gemäß einem der Ansprüche 2 bis 6, wobei die flüssigkeitszugewandte Oberfläche (12) ein hartes Material umfasst, das mindestens eines der folgenden einschließt: ein Metall, ein Keramikmaterial oder einen Verbundstoff.

## Revendications

1. Fenêtre dans une cible de spallation pulsée, comprenant une interface solide/liquide, l'interface (10) solide/liquide ayant une surface (12) faisant face au liquide et la surface (12) comprenant des structures lisses (30) et non lisses (16), les structures (16) non lisses étant disposées de manière à maintenir des bulles (18) de gaz à proximité de la surface (12).

2. Fenêtre suivant la revendication 1, **caractérisée en outre par** des moyens (22, 26, 32) de source de bulles disposés de manière à produire des bulles (18) à proximité de la surface.

3. Fenêtre suivant la revendication 1 ou 2, dans laquelle les structures (16) non lisses comprennent au moins une saillie (16) disposée sur la surface (12) en s'étendant dans une direction s'éloignant de la surface.

4. Fenêtre suivant la revendication 3, dans laquelle la au moins une saillie (16) fait un angle avec la surface (12) en coopérant ainsi avec les parties planes de la surface (12) de manière à obtenir une encoche (20) disposée de manière à maintenir une bulle (18) à proximité de la surface (12).

5. Fenêtre suivant la revendication 2, dans laquelle les moyens de source de bulles comprennent au moins un conduit (22) d'alimentation en gaz qui est disposé de manière à ce que sa sortie (32) soit près de la surface (12).

6. Fenêtre suivant la revendication 5, dans laquelle la source de bulles comprend en outre une cavité (26) disposée entre le conduit d'alimentation et la sortie (32) à la surface (12) de manière à définir un trou d'évacuation de gaz.

7. Fenêtre suivant l'une quelconque des revendications 2 à 6, dans laquelle la surface (12) comprend un matériau dur comportant au moins l'un d'un métal, d'une céramique et d'un matériau composite.
